(19) Europäisches Patentamt

European Patent Office

Office européen des brevets

(11) **EP 4 146 955 B1**

(12) **EUROPÄISCHE PATENTSCHRIFT**

(45) Veröffentlichungstag und Bekanntmachung des Hinweises auf die Patenterteilung:
**20.08.2025 Patentblatt 2025/34**

(21) Anmeldenummer: **21719659.1**

(22) Anmeldetag: **22.04.2021**

(51) Internationale Patentklassifikation (IPC):
*F16G 13/06* *(2006.01)* *G01B 21/16* *(2006.01)*
*G01B 21/32* *(2006.01)* *G01M 13/023* *(2019.01)*
*G05B 19/4065* *(2006.01)*

(52) Gemeinsame Patentklassifikation (CPC):
**G05B 19/4065; G01B 11/043; G01M 13/023;**
B65G 2207/48; G05B 2219/37252; Y02P 90/02

(86) Internationale Anmeldenummer:
**PCT/EP2021/060470**

(87) Internationale Veröffentlichungsnummer:
**WO 2021/224012 (11.11.2021 Gazette 2021/45)**

(54) **TRANSPORTVORRICHTUNG MIT MINDESTENS EINER KETTE**

TRANSPORT DEVICE

DISPOSITIF DE TRANSPORT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.05.2020 EP 20173731**

(43) Veröffentlichungstag der Anmeldung:
**15.03.2023 Patentblatt 2023/11**

(73) Patentinhaber: **Bühler GmbH**
**51580 Reichshof (DE)**

(72) Erfinder:
• **KRANK, Christoph**
**Ichikawa-shi, Chiba, 272-0033 (JP)**
• **KLÖR, Christoph**
**57482 Wenden (DE)**

(74) Vertreter: **Hepp Wenger Ryffel AG**
**Friedtalweg 5**
**9500 Wil (CH)**

(56) Entgegenhaltungen:
EP-A1- 3 196 625     EP-A2- 3 167 267
WO-A1-2017/220281     GB-A- 2 406 844
US-A1- 2011 093 218

**Beschreibung**

Die Erfindung betrifft eine Transportvorrichtung mit mindestens einer Kette, insbesondere zum Transport von Produktträgern in einer Anlage zur Herstellung von Lebensmittelprodukten, eine Anlage zur Herstellung eines Lebensmittelprodukts, ein Verfahren zum Bestimmung von Längen von Segmenten einer Kette sowie ein Computerprogrammprodukt.

Transportvorrichtungen mit Ketten kommen in einer Vielzahl von industrieller Anwendungen zu Antriebs- und/oder Transportzwecken Einsatz.

In Anlagen zur Herstellung von Lebensmittelprodukten werden Transportvorrichtungen mit Ketten dazu verwendet, Produktträger, insbesondere Formen, von Prozessstation zu Prozessstation zu transportieren. Häufig werden mehrere, bevorzugt zwei, Kettenstränge verwendet. Die Transportvorrichtung kann dabei Kettestränge verwenden, die bis zu mehreren hundert Metern lang sind oder aus Teiltransportvorrichtungen kombiniert werden mit Kettensträngen, die immer noch 20 bis 70 Meter lang sind. Die Ketten liegen in der Regel als endlos umlaufende Ketten vor, die über Umlenk- und Antriebskettenräder laufen.

Eine Transportvorrichtung besteht typischerweise aus einer oder mehreren Ketten, an denen Mitnehmer zum Mitnehmen eines Produkts oder Produktträgers angebracht sind, einem Antriebselement, einem Ausgleichselement zur Beeinflussung der Kettenspannung und Kettenräder zur Umlenkung.

Die Qualität der Transportvorrichtung wird beispielweise beeinflusst von der Kettenspannung, der Kettenstillstandsposition, der Qualität der Mitnehmer, der Parallelität von Ketten, der Länge der gesamten Kette und der Länge von Kettensegmenten.

Eine Kette besteht typischerweise aus einer Vielzahl von Kettengliedern, die durch Stifte miteinander verbunden sind, welche durch überlappende Öffnungen in benachbarten Kettengliedern hindurchgehen.

Über einen bestimmten Nutzungszeitraum wird eine Kette aufgrund der Reibung zwischen benachbarten Kettengliedern und zwischen den Stiften und den Kettengliedern einem Verschleiss ausgesetzt.

Die Verschleissrate einer Kette hängt von der Art der Transportvorrichtung ab, in der sie eingebaut ist, von den Belastungen, denen sie ausgesetzt ist, von der Geschwindigkeit, mit der sie betreiben wird, von der Schmierung, die sie erfährt und von der Umgebung sowie den Umwelteinflüssen, in der sie arbeitet.

Dieser Verschleiß führt zu einer Längung der Kette und damit zu einer Qualitätsminderung der Transportvorrichtung. Schließlich muss die Kette ersetzt werden, um eine Störung oder einen Ausfall der Transportvorrichtung zu vermeiden.

Typischerweise werden die Ketten einer regelmässigen Sichtkontrolle unterworfen. Allerdings können auch schon geringe Längenveränderungen zu einer Beeinträchtigung der Abläufe führen. Da der Verschleiss der Ketten weder vermieden noch vorbestimmt werden kann, ist eine automatisierte und nach Möglichkeit kontinuierliche Überwachung wünschenswert.

Aus EP2710321B1 ist eine Vorrichtung mit einer Messvorrichtung zur Messung einer Längung der Kette bekannt, die zwei Signalaufnehmer, welche in einem Abstand zueinander angeordnet sind, aufweist.

DE 10 2017 119 301 A1 offenbart eine Sensoreinrichtung zur Bestimmung von Segmenten einer Kette mit einem Sensor, der geeignet ist, Messdaten zur Bestimmung der Position eines Segments der Kette zu erfassen und einen Sensor umfasst, der geeignet ist, Messdaten zur Bestimmung der Längenwerte eines Segments der Kette zu erfassen.

US 5,490,590 beschreibt einen Kettenverschleissmonitor mit einem Rad, das in Reibeingriff mit der Kette gebracht wird. Die Drehbewegung der Welle des Rads wird in ein elektrisches Signal umgewandelt, das zur Verarbeitung an eine Steuerung weitergeleitet wird. Gleichzeitig wird die Anwesenheit jedes Kettengliedes durch einen Sensor erfasst, wenn es eine vorbestimmte Stelle passiert. Der Sensor erzeugt ein Signal, das ebenfalls an die Steuerung weitergeleitet wird. Die Steuerung berechnet aus den Signalen eine Länge. Diese Anordnung ist anfällig für Ungenauigkeiten, die durch relativen Schlupf zwischen Reibrad und Kette verursacht werden.

Alle bekannten Sensoreinrichtungen müssen als externe Einheit in die Transportvorrichtung integriert werden. Es kann notwendig sein, dass dafür die Kette zu öffnen ist und/oder an der Kette spezielle Messgeber anzubringen sind. Es muss ein für die Messung und die Zugänglichkeit geeigneter Montageplatz gefunden werden. Die Montage ist eher aufwendig. Ein Bediener muss die Informationen an jeder einzelnen Messstation ablesen.

Für eine automatisierte Überwachung muss die Sensoreinrichtung mit der Anlagensteuerung in Verbindung gebracht werden können und die Sensoreinrichtung benötigt somit die passenden Schnittstellen.

US 2011/0093218 A1 offenbart ein System zum Beobachten der Abnutzung einer Kette, wobei mit drei Detektoren verschiedene Bereiche von Kettengliedern detektiert werden. Mittels einer Kontrolleinheit werden die Signale der Detektoren verarbeitet und Abstände von charakteristischen Abschnitten der Kettenglieder bestimmt. Mit einem Marker kann festgestellt werden, wann die Kette einen vollen Durchlauf absolviert hat.

EP 3 167 267 A2 zeigt eine Vorrichtung zum Messen einer Kettenlänge mit zwei Sensoren, die jeweils an Uhren angeschlossen sind. Aus der Distanz der Sensoren und der Zeiten, die über die beiden Uhren gemessen werden, lässt sich der Abnutzungsgrad der Kette bestimmen.

EP 3 196 625 A1 zeigt ein System zum Überwachen einer Kettenabnutzung, wobei zwei Sensoren auf charakteristische Bereiche der Kette gerichtet sind. Aus dem Vergleich der Messdaten und die Zeitabhängigkeit der Messdaten lässt sich ein Verschleiss der Kette bestimmen.

GB 2 406 844 offenbart ein System zum Überwachen einer Kettenlängung. Auf einer Kette sind zwei Marken angebracht, die über zwei Sensoren detektiert werden. Eine Kontrolleinheit berechnet die Geschwindigkeit der Kette aus den Zeiten, die vergehen, während die entsprechenden Messmarken die Strecke zwischen den Sensoren zurücklegen. Daraus kann auf die Abstände der Messmarke zurückgeschlossen werden und auf den Verschleiss der Kette.

WO 2017/220281 A1 zeigt die Überwachung der Dehnung eines Transportelements, wobei eine Antriebseinheit einen Drehwinkelgeber aufweist und eine Steuereinheit derart mit dem Drehwinkelgeber sowie mit einem Sensor verbunden ist, dass mittels der Daten des Drehwinkelgebers sowie des Sensors eine Dehnung des Transportelements berechenbar ist.

Der Erfindung liegt die Aufgabe zugrunde, die Nachteile des Standes der Technik zu überwinden und insbesondere eine Transportvorrichtung, eine Anlage zur Herstellung eines Lebensmittelprodukts, ein Verfahren zum Bestimmung von Längen von Segmenten einer Kette sowie ein Computerprogrammprodukt zur Verfügung zu stellen, die eine präzise Längenerfassung und eine einfache Handhabung erlauben.

Die Aufgabe wird gelöst durch eine Transportvorrichtung mit den Merkmalen des unabhängigen Anspruchs 1 und einem Verfahren mit den Merkmalen des unabhängigen Anspruchs 10.

Die Transportvorrichtung, insbesondere zum Transport von Produktträgern in einer Anlage zur Herstellung von Lebensmittelprodukten, umfasst mindestens eine Kette, an welcher Messmarken angebracht sind.

Bevorzugt umfasst die Transportvorrichtung zwei parallel zueinander angeordnete Ketten auf. Die Produktträger sind bevorzugt Formentabletts, in welche zum Beispiel eine fettbasierte Masse wie Schokolade, vergossen wird.

Die Produktträger werden mittels Mitnehmern von der Kette mitgezogen oder von der Kette geschoben. Bevorzugt dienen die Mitnehmer, die als Anbauteil, zum Beispiel als Kettennase, Mitnehmerlasche oder Bolzen, ausgeführt sein können, als Messmarken.

Die Transportvorrichtung umfasst ausserdem ein elektrisches Antriebssystem zum Antreiben der mindestens einen Kette mit einem Elektromotor, zum Beispiel einem Servomotor, und einem Positionssensor, insbesondere einem Absolutwertgeber.

Die Kette ist typischerweise als endlos umlaufende Ketten ausgebildet, die über mindestens ein Antriebsrad und mindestens eine Umlenkrad läuft. Zusätzlich ist zumeist ein Ausgleichselement zur Beeinflussung der Kettenspannung vorgesehen, zum Beispiel ein Spannrad, das auf einer Gewindestange gelagert sein kann oder das mit einem Pneumatikzylinder angesteuert werden kann.

Das Antriebssystem kann als ziehender oder schiebender Antrieb wirken, wobei zum Beispiel das elektrische Antriebssystem, insbesondere ein Servoantrieb, und der Kettenspanner räumlich beieinander oder räumlich getrennt voneinander angeordnet sind. Der Teil der Kettenstrecke, der zum Transport der Produktträger dient, wird Lasttrum genannt, die zurücklaufenden Kettenstrecke Leertrum.

Die Transportvorrichtung weist eine Anlagensteuereinheit auf. Diese dient zur Steuerung der Transportvorrichtung. Bei der Anlagensteuereinheit kann es sich auch um eine zentrale Steuereinheit zur Steuerung aller Elemente einer Anlage zur Herstellung von Lebensmittelprodukten handeln.

Die Transportvorrichtung weist überdies einen Messsensor zum Erfassen der Messmarken auf. Der Messsensor ist bevorzugt nahe der Kette und in möglichst grosser Entfernung vom Antriebsrad angeordnet.

Erfindungsgemäss umfasst die Anlagensteuereinheit einen ersten Eingang zum Empfangen von Messdaten von dem Messsensor und einen zweiten Eingang zum Empfangen von Positionsdaten von dem Positionssensor. Die Anlagensteuereinheit ist dafür ausgelegt, Daten vom Messsensor und vom Positionssensor zu empfangen, zeitrichtig zueinander zuzuordnen und daraus Längen zwischen, insbesondere zwei aufeinanderfolgenden, Messmarken zu bestimmen.

Positionsdaten von dem Positionssensor geben zu jeder Zeit an, in welcher Umdrehung und in welcher Position innerhalb der Umdrehung sich der Motor befindet, woraus auf die genaue Lage der Kette geschlossen werden kann.

Da die Kettenglieder eine definierte Position auf dem Antriebsrad einnehmen, entspricht die Differenz der Positionsdaten einer Abrollstrecke der Kettenglieder auf dem Antriebsrad und somit der Länge eines Kettensegments. Wenn also die Positionsdaten zeitlich den Messdaten zugeordnet werden, können Längen zwischen Messmarken bestimmt werden.

Insbesondere, wenn regelmässig auf der Kette angebrachte Messmarken verwendet werden, zum Beispiel die Mitnehmer, so ist die Vorrichtung nicht darauf beschränkt, die Längen bestimmter Kettensegmente zu detektieren, sondern es können beliebige Abschnitte der Kette zwischen Messmarken und auch die Gesamtlänge der Kette überprüft werden.

Die Anlagensteuerung übernimmt die Längenbestimmung. Die Messung erfolgt innerhalb der bestehenden Steuerungsarchitektur und eine autonome Messeinrichtung wird nicht benötigt. Somit entfallen die sonst notwendigen Schnittstellen.

Bevorzugt werden zur Messung überwiegend Bauteile verwendet, die ohnehin schon an einer Transportvorrichtung vorhanden sind, nämlich der elektrische Antrieb und die Mitnehmer, lediglich ein Messsensor kommt hinzu.

Bei dem Messsensor kann es sich um einen induktiven oder optoelektronischen Sensor handeln.

Bevorzugt liefert der Messsensor eine Datenänderung, wenn sich seine Umgebung ändert. Dies kann geschehen, wenn ein Objekt, nämlich ein Teil einer Messmarke, in das Messfeld eintritt oder wenn ein Objekt, nämlich ein Teil einer Messmarke, aus dem Messfeld austritt.

Für die Messpräzision sind Schaltabstand und Schaltfrequenz von Bedeutung. Bevorzugt werden Sensoren mit einer Schaltfrequenz von grösser 2000/s gewählt.

Bei induktiven Näherungsschaltern kann die Schaltfrequenz mit grösser werdendem Abstand sinken. Es muss daher sichergestellt werden, dass die Messmarken einen definierten Abstand zu dem induktiven Sensor aufweisen. Die Transportvorrichtung kann dazu im Bereich des Sensors eine Führungsschiene aufweisen, mit welcher die Kette und damit die Messmarken in einem definierten Abstand zu dem Sensor gehalten werden.

Optoelektronische Sensoren können anfällig gegen Staub und Verschmutzung sein, sind aber robust gegenüber Abstandsänderungen. Denkbar ist die Verwendung einer Gabellichtschranke, also einer Einweglichtschranke, oder der Einsatz einer Reflexionsmessung mit einer Rotlicht-LED oder einem Laser.

In einer vorteilhaften Ausführung der Transportvorrichtung umfasst die mindestens eine Kette mindestens eine Referenzmessmarke. Insbesondere handelt es sich bei der Referenzmessmarke um eine Messmarke mit einer von den übrigen Messmarken abweichenden Geometrie. Je nach Art des Messsensors kann die Referenzmessmarke auch eine von den übrigen Messmarken abweichende elektromagnetische Eigenschaft oder Reflexivität aufweisen. Das Messsignal, das eine Referenzmarke hervorruft, weicht von dem Messsignal der übrigen Messmarken ab.

Die Geometrie der Messmarke resultiert in einem bestimmten Messmuster, sodass eine Referenzmessmarke mit abweichender Geometrie von den übrigen Messmarken unterschieden werden kann. Von der Anlagensteuerung ermittelte Längen können damit eindeutig Abständen zu der Referenzmarke und damit bestimmten Abschnitten der Kette zugeordnet werden.

Mitnehmer sind zumeist als Kettennase mit trapezförmiger oder dreieckiger Geometrie ausgeführt. Werden die Mitnehmer als Messmarken verwendet, kann eine Referenzmessmarke zum Beispiel eine Loch aufweisen oder eine andere Basisbreite als die übrigen Mitnehmer.

Bevorzugt ist die Anlagensteuereinheit dazu ausgelegt, empfangene Daten mit einem Anlagentakt, insbesondere dem Bustakt, zu synchronisieren.

Neben dem Eingang für die Messdaten wird auch der Eingang für die Positionsdaten und bevorzugt das elektrische Antriebssystem, insbesondere ein Servoantrieb, auf diesen Takt synchronisiert bzw. angesteuert. Dadurch können beide Informationen miteinander verknüpft und ein exaktes Ergebnis erhalten werden.

Das Ergebnis ist insbesondere unabhängig von einer Zykluszeit der übrigen Elemente zur Herstellung von Lebensmittelprodukten, die ebenfalls von der Anlagensteuerung bedient werden können. Während der Anlagenzyklus in einer Endlosschleife abläuft, wird der azyklische Steuerungsteil im Anlagentakt ausgeschert.

Bevorzugt weist die Anlagensteuereinheit einen Anlagentaktgeber auf. Der Taktgeber wird von der Anlagensteuereinheit zum Beispiel in Form des Profinet-IRT Bustaktes zur Verfügung gestellt.

Bevorzugt weist die Transportvorrichtung ein taktsynchrones Bussystem auf zum Synchronisieren der Anlagensteuereinheit und des elektrischen Antriebsystems und/oder zum Synchronisieren der Anlagensteuereinheit und der eingehenden Messdaten.

Erfindungsgemäss weist die Transportvorrichtung eine Prozessoreinheit zur Datenvorverarbeitung auf, die einen Eingang für von dem Messsensor erfasste Daten aufweist und einen Ausgang zum Weiterreichen der Daten an die Anlagensteuereinheit, insbesondere mittels des taktsynchronen Bussystems.

Die Prozessoreinheit dient beispielweise als Eingangskarte für die Anlagensteuereinheit. Diese Eingangskarte lässt sich auf den Taktgeber synchronisieren und besitzt zusätzlich eine Oversamplingfunktion.

Als Oversampling wird die Erfassung von Daten in zeitäquidistanten Subtakten bezeichnet, wobei eine bestimmte Anzahl von Subtakten einem Bustakt, zum Beispiel einem Profinet Bustakt, entspricht. Die Dauer des Subtaktes ist das Abtastintervall.

Bei einem Bustakt von 4ms Dauer und einer Abtastrate von 32 ergibt sich beispielsweise ein Abtastintervall von $125\mu s$.

Typischerweise ist ein kleinster Bustakt von $250\mu s$ einstellbar, was bei einer Abtastrate von 32 zu einer Auflösung von $7.8125 \ \mu s$ führt.

Das elektrische Antriebsystem kann so ausgelegt sein, dass die Kette innerhalb von einem Abtastintervall von $125\mu s$ um $31.25\mu m$ bewegt werden kann, innerhalb einem Abtastintervall von $7.8125\mu s$ um $1.95\mu m$.

Es kann also hochpräzise eine Längenänderung festgestellt werden, wenn eine zeitliche Abweichung bei der Erfassung der Messsignale festgestellt wird.

Für das Oversampling benötigt man eine spezielle HighSpeed Eingangskarte. Die Adressbelegung bei Oversampling unterscheidet sich von der normalen Eingangsbelegung. Eine 8 Kanal Eingangskarte belegt insgesamt 32Byte.

Einstellbare Oversampling Faktoren sind 1 bis 32, wobei der Faktor 1 zu keinem Effekt führt, sondern den Bustakt reproduziert. Bei aktiviertem Oversampling wird jeder Eingang mit 32 Bit dargestellt. Aus der Bitposition im Eingangsdoppelwort lässt sich der Subtakt des Signalwechsels am Eingang eindeutig bestimmen. Werden weniger als 32 Subtakte benötigt, so können die nicht genutzten Bits der Eingangskarte mit null gefüllt werden.

Die entsprechende Position des Antriebs, zum Beispiel der entsprechende Servolageistwert, kann dann von der Anlagensteuerung zeitlich genau zugeordnet werden.

Eine zeitlich genaue Zuordnung besteht darin, einen Servolageistwert zum Zeitpunkt eines bestimmten Messereignisses, welches mit den Daten vom Messsensor erfasst wird, zu bestimmen.

Beispielsweise werden die Daten des Messsensors erfasst, wobei die Daten eine Signalwechsel während eines Bustakts zeigen, zu dessen Beginn bei einem Zeitpunkt t1 die Servoposition einen ersten Wert $P_{t1}$ besitzt. Am Ende dieses Bustakts bei einem Zeitpunkt t2 hat die Servoposition einen zweiten Wert $P_{t2}$. Die Servopositionen zu den Zeitpunkten t1 und t2 werden mit den Daten vom Positionssensor erfasst.

Der Servolageistwert $P_x$ zu dem Zeitpunkt, bei dem der Signalwechsel in einem bestimmten Subtakt festgestellt wird, kann durch Interpolation, insbesondere lineare Interpolation, festgestellt werden.

Es wird die folgende Beziehung verwendet:

$$P_x \ = \ (P_{t2} - \ P_{t1}) \ * \ (X_{pos} - 1) \ /OVS \ + \ P_{t1} \ [mm].$$

Hierbei ist $P_x$ der zu bestimmende Servolageistwert, $P_{t1}$ die Servoposition zum Zeitpunkt t1 bei einem be-stimmten Bustakt, $P_{t2}$ die Servoposition zum Zeitpunkt t2 bei einem nachfolgenden Bustakt, $X_{pos}$ der Subtakt, bei dem ein Signalwechsel von 0 nach 1 stattfindet.

Es können somit die in den Messdaten erfassten Signalwechsel sehr genau einem bestimmten Servolageistwert zugeordnet werden. Das Oversampling erreicht eine Genauigkeit, die entsprechend dem eingestellten Oversamplingfaktor höher ist, als dies mit dem Bustakt möglich wäre.

Es können nun die als relevant zu erachtenden Signalwechsel betrachtet werden, zum Beispiel solche, bei denen der Signalwechsel durch eine ankommende Messmarke erzeugt wird. Es kann beispielweise ein Licht- oder Schallsignal durch eine ankommende Messmarke unterbrochen werden. Aus dem Abstand der Servolageistwerte, die bei solchen als relevant erachteten Signalwechseln bestimmt werden, kann auf die Kettenqualität geschlossen werden.

Bleibt der Abstand der Servolageistwerte konstant, so hat sich die Länge der Kette nicht verändert.

Wenn die Kette eine Längung erfährt, wird der zeitliche Abstand der als relevant zu betrachtenden Signalwechsel grösser. Aus dem entsprechenden Abstand der Servolageistwerte kann auf die Grösse der Längung geschlossen werden.

In einer vorteilhaften Ausbildung der Transportvorrichtung ist die Anlagensteuereinheit dazu ausgelegt, Rohdaten zu speichern. Die Anlagensteuereinheit kann dazu über einen nicht flüchtigen Speicher verfügen und/oder auf einen solchen zugreifen, sodass die Daten für weitere Berechnungen verwendbar sind.

Im Neuzustand der Anlage oder nach einem Kettenwechsel können die aktuellen Daten als Referenzdaten gespeichert werden.

Insbesondere ist die Anlagensteuereinheit dazu ausgelegt, Messereignisse aus Messdaten zu bestimmen. Die Messdaten zeigen in der Regel einen Signalwechsel in einem bestimmten Subtakt. Aus der Musterfolge von Signalwechseln kann auf ein Messereignis geschlossen werden. Je nach Messmarke und Sensor können beispielsweise zwei in einem bestimmten zeitlichen Abstand erfolgende Signalwechsel das Passieren einer Messmarke anzeigen. Vier in bestimmten zeitlichen Abständen erfolgende Signalwechsel können zum Beispiel das Passieren einer Messmarke mit Loch, also einer Referenzmarke anzeigen.

Ein Messereignis kann also zum Beispiel das Vorbeifahren einer Messmarke oder einer Referenzmarke am Sensor sein.

Der Zeitpunkt des ersten Signalwechsels eines für das Messereignis typischen gemessenen Musters kann dann mit den entsprechenden Positionsdaten in Verbindung gebracht werden und die Anlagensteuereinheit kann zum Beispiel wie oben beschrieben einen entsprechenden Servolageistwert bestimmen.

Insbesondere ist die Anlagensteuereinheit dazu ausgelegt, Längen zwischen Messereignissen, also zum Beispiel zwischen nacheinander erfolgenden und als relevant zu erachtenden Signalwechseln, zu bestimmen.

Die Differenz zweier zu nachfolgenden Messereignissen gehörenden Servolageistwerten ist beispielsweise ein Mass für die Kettenlänge zwischen entsprechenden nacheinander folgenden Messmarken. Genauso kann die Länge zwischen Referenzmarke und Messmarken und/oder die Länge zwischen zwei Messungen derselben Referenzmarke erfolgen.

Alternativ oder zusätzlich ist die Anlagensteuereinheit dazu ausgelegt, Veränderungen von Längen zwischen Messereignissen zu erkennen. Die Anlagensteuereinheit kann erfasste Servolageistwerte oder Längen speichern, mit später erfassten Werten oder Längen vergleichen und/oder Verläufe von erfassten Werten oder Längen analysieren.

Die Anlagensteuereinheit kann auch erfasste Werten oder Längen mit Referenzwerten vergleichen.

Erfindungsmässig ist die Anlagensteuereinheit dazu ausgelegt, ein Signal zu erzeugen, das eine Information über die Qualität der Kette liefert.

Aus dem Vergleich von aktuell erfassten Messergebnissen mit Referenzdaten können Empfehlungen für das Bedien- bzw. Wartungspersonal abgeleitet werden. Dabei geht es nicht nur um die Gesamtlänge der Kette, sondern auch um die Länge einzelnen Teilungen oder Segmente.

Die Anlagensteuereinheit kann ein Signal erzeugen, wenn zum Beispiel die Gesamtlänge der Kette um mehr als 3% zugenommen hat.

Die Anlagensteuereinheit kann ein Signal erzeugen, wenn der Verlauf der Kettenlängenzunahme einen Sprung aufweist.

Bei dem Signal kann es sich um eine optisches oder akustisches Warnsignal handeln oder um eine Meldung, die in Form von Daten an eine Anzeigeeinheit, zum Beispiel einen Monitor, weitergeleitet wird.

Je nach dem Signal kann ein Bediener entscheiden, ob die Kette ausgetauscht, verkürzt oder geschmiert werden muss, oder ob die Kettenspannung anders eingestellt werden muss. Die Anlagensteuereinheit kann dafür ausgelegt sein, einen entsprechenden Vorschlag zu generieren und anzuzeigen.

In einer vorteilhaften Ausbildung der Transportvorrichtung weist die Anlagensteuereinheit mindestens einen Ausgang auf, der dazu ausgelegt ist, Daten weiterzuleiten, insbesondere an eine Anzeigeeinheit und/oder eine Cloud.

Daten über die Qualität der Kette können an eine zentrale Cloud-Plattform weitergeleitet werden, auf welcher die gesamten Anlagendaten überwacht werden. Dem Bediener kann von der Cloud-Plattform eine Wartung empfohlen werden und gegebenenfalls eine neue Kette angeboten werden.

In einer vorteilhaften Ausbildung der Transportvorrichtung weist die Anlagensteuereinheit mindestens einen weiteren Eingang zum Empfang von weiteren Daten auf. Über diesen Eingang kann ein Bediener Daten eingeben, beispielsweise, wenn eine neue Kette montiert wurde oder wenn die Kettenspannung neu eingestellt wurde.

Vorteilhafterweise weist das elektrische Antriebssystem ein Stellgerät mit Schnittstelle zum Datenaustausch mit der Anlagensteuereinheit auf, insbesondere einen Frequenzumrichter. Über diesen kann ein Synchronisieren auf den gleichen Anlagentakt erfolgen.

Die Aufgabe wird ausserdem gelöst durch eine Anlage zur Herstellung eines Lebensmittelprodukts umfassend mindestens eine Transportvorrichtung wie sie oben beschrieben wurde. Die Anlage umfasst typischerweise Bearbeitungsstationen, an denen die Produktträger vorbei geführt werden, zum Beispiel eine Giessmaschine, eine Rüttelstation, eine Kaltstempelvorrichtung, eine Deckelvorrichtung, eine Dekorierstation und/oder eine Kühlstation.

Die Aufgabe wird ausserdem gelöst durch ein Verfahren zum Bestimmung von Längen von Segmenten einer Kette, die mittels eines elektrischen Antriebs angetrieben wird, insbesondere in einer Transportvorrichtung wie sie oben beschrieben wurde.

Ein Messsensor erfasst auf der Kette angebrachte Messmarken, insbesondere Mitnehmer. Die vom Messsensor erfassten Daten und die von einem Positionssensor des elektrischen Antriebs gesendeten Daten werden zeitrichtig zueinander zugeordnet. Dabei werden vom Messsensor erfasste Daten und von einem Absolutwertgeber eines Servomotors, der die Kette antreibt, gesendete Daten zeitrichtig zueinander zugeordnet.

Dies geschieht, indem eine Anlagensteuerung sowohl mit dem elektrischen Antrieb wie auch Messsensor auf den gleichen Takt synchronisiert ist.

Der Servolageistwert wird mittels Oversampling festgelegt.
Es wird die oben genannte Beziehung

$$P_x \;=\; (P_{t2} - P_{t1}) \;*\; (X_{pos} - 1) \;/OVS + P_{t1} \;\; [mm]$$

verwendet.

Aus den vom Messsensor erfassten Daten und den dazu korrelierten Daten des Positionssensors werden Längen zwischen, insbesondere zwei aufeinanderfolgenden, Messmarken bestimmt.

Es wird ein Signal erzeugt, das eine Information über die Qualität der Kette liefert
Bevorzugt umfasst das Verfahren die Schritte der Rohdatenspeicherung, der Bestimmung von Messereignissen aus Messdaten, der Bestimmung von Längen zwischen Messereignissen und/oder der Erkennung von Veränderungen von Längen zwischen Messereignissen.

Insbesondere synchronisiert eine Anlagensteuereinheit durch eine taktsynchrone Busverbindung vom Messsensor erfasste Messdaten und von einem Positionssensor des elektrischen Antriebs gesendete Daten.

Die Aufgabe wird ausserdem gelöst durch ein Computerprogrammprodukt, umfassend Befehle, die bei der Ausführung des Programms durch einen Computer diesen veranlassen, die Schritte des oben beschriebenen Verfahrens auszuführen.

Das Programm wird bevorzugt auf der SPS einer Anlagensteuereinheit ausgeführt.

Die Erfindung wird nachfolgend in Ausführungsbeispielen anhand von Zeichnungen erläutert.

Es zeigen

Figur 1 einen Teil einer Transporteinrichtung in perspektivischer Ansicht;
Figur 2 eine schematische Darstellung einer Transporteinrichtung;
Figur 3a eine schematische Darstellung eines Mitnehmers;
Figur 3b eine schematische Darstellung einer Referenzmarke;
Figur 3c eine schematische Darstellung eines Messmusters des Mitnehmers;
Figur 3d eine schematische Darstellung eines Messmusters der Referenzmarke;
Figur 4 eine Messmarkenführung in perspektivischer Ansicht.

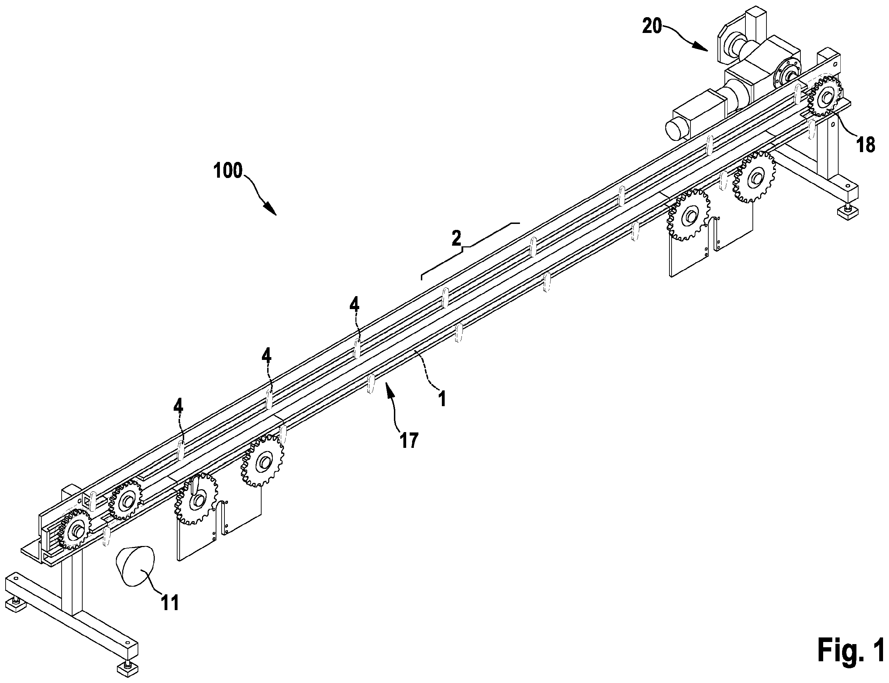

Figur 1 zeigt einen Teil einer Transporteinrichtung 100 in perspektivischer Ansicht.

Die Transporteinrichtung 100 umfasst eine Kette 1, an der in regelmässigen Abständen Messmarken 4 angebracht sind, und ein elektrisches Antriebssystem 20 zum Antreiben der Kette 1. Ein Abschnitt der Kette, insbesondere der Kettenabschnitt zwischen zwei Messmarken 4, wird Segment 2 genannt.

Eine Messsensor 11 ist möglichst weit von dem elektrischen Antriebssystem 20 angebracht. Mit einer Messung der Kette auf dem Antriebsrades 18 oder in unmittelbarer Nähe des Antriebsrades 18 könnte keine oder nur kaum eine Lägenveränderung festgestellt werden, da die Glieder der Kette 1 auf die Ritzel des Antriebsrades 18 gezwungen werden und daher dort einen definierten Abstand beibehalten.

Der Messsensor 11 kann auf den Leertrum 17 gerichtet sein.

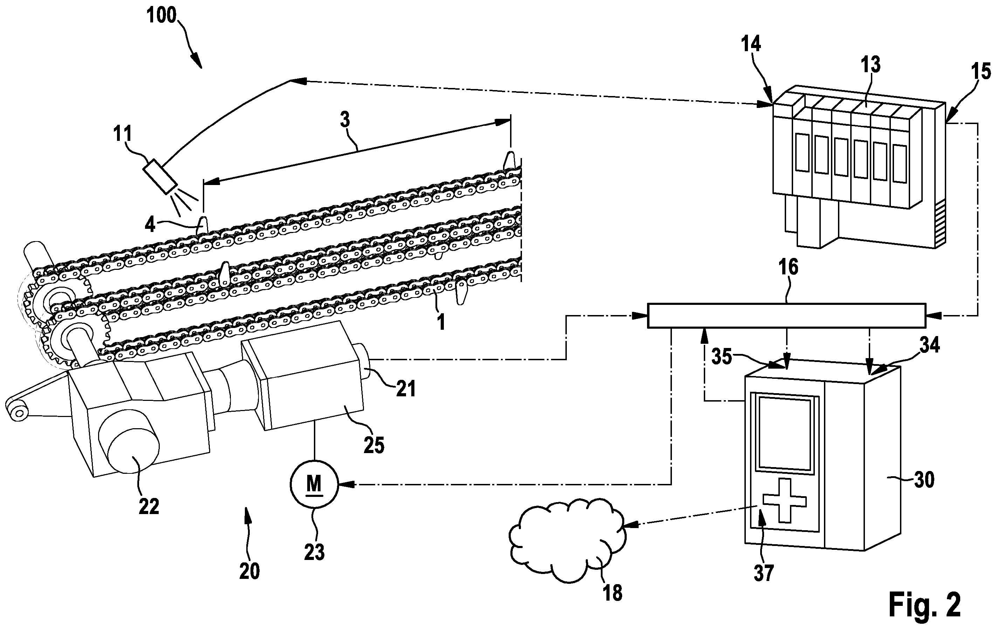

Figur 2 zeigt eine schematische Darstellung einer Transporteinrichtung 100.

Das elektrische Antriebssystem 20 umfasst einen Elektromotor 25, einen Positionssensor 21, hier einen Absolutwertgeber, ein Getriebe 22 und ein Stellgerät 23.

Die Transporteinrichtung 100 umfasst eine Anlagensteuereinheit 30, die über ein taktsynchrones Bussystem 16 mit dem elektrischen Antriebssystem 20 synchronisiert ist. Die Anlagensteuereinheit 30 steuert das Stellgerät 23, zum Beispiel einen Frequenz-umrichter, an, und erhält über einen Eingang 35 vom Absolutwertgeber 21 Positionsdaten.

Die Transporteinrichtung 100 umfasst ausserdem einen Messsensor 11 zum Erfassen der Messmarken 4 auf der Kette 1.

Die Anlagensteuereinheit 30 weist einen ersten Eingang 34 zum Empfangen von Messdaten von dem Messsensor 11 und einen zweiten Eingang 35 zum Empfangen von Positionsdaten von dem Positionssensor 21 auf. Die Transporteinrichtung 100 ist dafür ausgelegt, Daten vom Messsensor 11 und vom Positionssensor 21 zu empfangen, zeitrichtig zueinander zuzuordnen und daraus Längen 3 zwischen, insbesondere zwei aufeinanderfolgenden, Messmarken 4 zu bestimmen.

Die Anlagensteuereinheit 30 kann eine Baugruppe zur Überwachung mechanischer Baugruppen aufweisen, beispielweis eine Simatic S7-1500.

Die Transporteinrichtung 100 umfasst eine Prozessoreinheit 13 zur Datenvorverarbeitung, die einen Eingang 14 für von dem Messsensor 11 erfasste Daten aufweist und einen Ausgang 15 zum Weiterreichen der Daten an die der Anlagensteuereinheit 30, insbesondere mittels des taktsynchronen Bussystems 16.

Bei der Prozessoreinheit 13 kann es sich um eine HighSpeed Eingangskarte handeln, zum Beispiel eine Simatic ET200SP.

Die Anlagensteuereinheit 30 besitzt mindestens einen Ausgang 37 und ist dazu ausgelegt, Daten weiterzuleiten, insbesondere an eine Cloud 18.

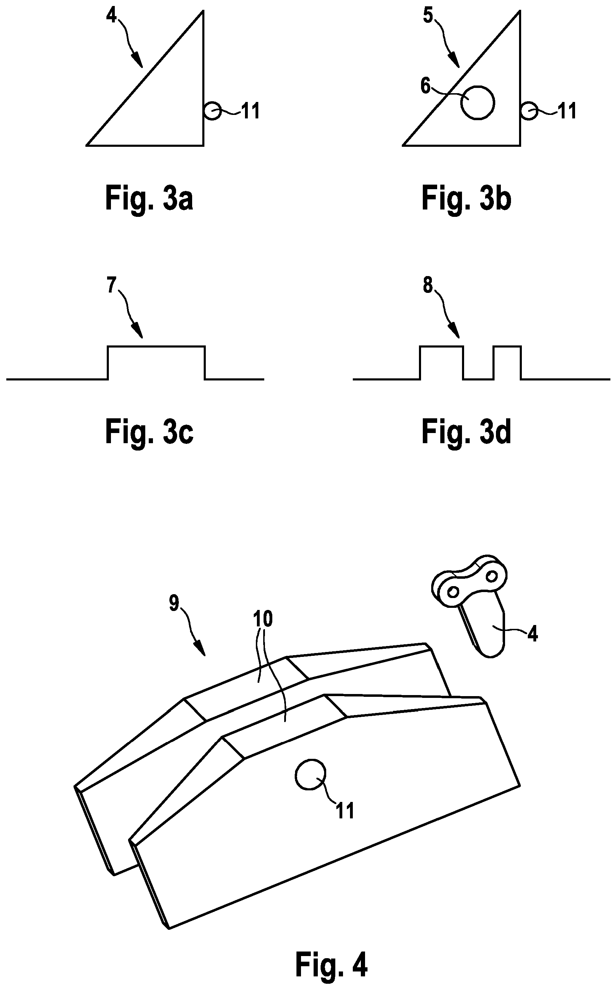

Figur 3a zeigt eine schematische Darstellung eines Mitnehmers 4, der eine im Wesentlichen dreieckige Form aufweist. Figur 3b zeigt eine schematische Darstellung einer Referenzmarke 5, die als Mitnehmer mit abweichende geometrischer Form ausgebildet ist und ein Loch 6 aufweist.

Figur 3c zeigt eine schematische Darstellung eines Messmusters 7, das ein Mitnehmer 4 gemäss Figur 3a an einem optischen Sensor 11 erzeugt. Figur 3d zeigt eine schematische Darstellung eines Messmusters 8, das eine Referenzmarke 6 gemäss Figur 3b an dem optischen Sensor 11 erzeugt.

Für die Längenauswertung wird bevorzugt der Zeitpunkt verwendet, an welchem die steile Flanke des Mitnehmers 4 oder der Referenz marke 5 den Sensor 11 passiert.

Figur 4 zeigt eine Führungsschiene 9 in perspektivischer Ansicht. Um sicherzustellen, dass die Messmarken 4 von dem Messsensor 11 einen definierten Abstand aufweisen, werden die Messmarken 4 beim Passieren des Messsensors 11 zwischen zwei Führungsbacken 10 entlang geführt.

**Patentansprüche**

**1.** Transportvorrichtung (100), insbesondere zum Transport von Produktträgern in einer Anlage zur Herstellung von Lebensmittelprodukten, mit

a. mindestens einer Kette (1), an der Messmarken (4) angebracht sind,
b. einem elektrisches Antriebssystem (20) zum Antreiben der mindestens einen Kette (1), umfassend einen Servomotor (25) und einen Positionssensor (21), nämlich einen Absolutwertgeber,
c. einer Anlagensteuereinheit (30),
d. einem Messsensor (11) zum Erfassen der Messmarken (4), mit einer Schaltfrequenz von grösser 2000/s,

**dadurch gekennzeichnet, dass**

die Anlagensteuereinheit (30) einen ersten Eingang (34) zum Empfangen von Messdaten von dem Messsensor (12) und einen zweiten Eingang (35) zum Empfangen von Positionsdaten von dem Positionssensor (21) umfasst, und dafür ausgelegt ist,

- Daten vom Messsensor (11) und vom Positionssensor (21) zu empfangen,
- zeitrichtig zueinander zuzuordnen,
- daraus Längen zwischen, insbesondere zwei aufeinanderfolgenden, Messmarken (4) zu bestimmen und
- daraus ein Signal zu erzeugen, das eine Information über die Qualität der Kette liefert,

wobei die Transportvorrichtung (100) eine Prozessoreinheit (13) zur Datenvorverarbeitung umfasst, die als Eingangskarte für die Anlagensteuereinheit (30) dient und die einen Eingang (14) für von dem Messsensor (11) erfasste Daten aufweist und einen Ausgang (15) zum Weiterreichen der Daten an die der Anlagensteuereinheit (30),
mit einer Oversamplingfunktion zur Bestimmung eines Subtaktes bei einem Signalwechsel am Eingang, und wobei die Anlagensteuereinheit dazu ausgelegt ist, einen Servolageistwert, welcher der Position des Antriebs bei einem Signalwechsel entspricht, zeitlich genau zuzuordnen, wobei die Anlagensteuereinheit dazu ausgelegt ist, den Servolageistwert über die folgende Beziehung zeitlich genau zuzuordnen:

$$P_x = (P_{t2} - P_{t1}) * (X_{pos} - 1) / OVS + P_{t1} \ [mm],$$

wobei
$P_x$ der zu bestimmende Servolageistwert,
$P_{t1}$ die Servoposition zum Zeitpunkt t1 bei einem Bustakt,
$P_{t2}$ die Servoposition zum Zeitpunkt t2 bei einem nachfolgenden Bustakt,
$X_{pos}$ der Subtakt, bei dem ein Signalwechsel von 0 nach 1 stattfindet, OVS der eingestellte Oversamplingfaktor.

2. Transportvorrichtung gemäss Anspruch 1, wobei der Messsensor (11) ein induktiver oder optoelektronischer Sensor ist.

3. Transportvorrichtung gemäss einem der vorhergehenden Ansprüche, wobei die mindestens eine Kette (1) mindestens eine Referenzmessmarke (5) umfasst, insbesondere mit einer von den übrigen Messmarken (4) abweichenden Geometrie.

4. Transportvorrichtung gemäss einem der vorhergehenden Ansprüche, wobei die Anlagensteuereinheit (30) dazu ausgelegt ist, empfangene Daten mit dem Anlagentakt, insbesondere mit einem Bustakt, zu synchronisieren.

5. Transportvorrichtung gemäss einem der vorhergehenden Ansprüche, wobei

die Anlagensteuereinheit (30) einen Anlagentaktgeber umfasst und
die Transportvorrichtung (100) ein taktsynchrones Bussystem (16) aufweist zum Synchronisieren der Anlagensteuereinheit (30) und des elektrischen Antriebsystems (20) und/oder zum Synchronisieren der Anlagensteuereinheit (30) und der eingehenden Messdaten.

6. Transportvorrichtung gemäss einem der vorhergehenden Ansprüche, wobei die Anlagensteuereinheit (30) dazu ausgelegt ist,

a. Rohdaten zu speichern und/oder

b.Messereignisse aus Messdaten zu bestimmen und/oder

c. Längen zwischen Messereignissen zu bestimmen und/oder

d. Veränderungen von Längen zwischen Messereignissen zu erkennen.

7. Transportvorrichtung gemäss einem der vorhergehenden Ansprüche, wobei die Anlagensteuereinheit (30) mindestens einen Ausgang (37) aufweist und dazu ausgelegt ist, Daten weiterzuleiten, insbesondere an eine Anzeigeeinheit und/oder eine Cloud (18).

8. Transportvorrichtung gemäss einem der vorhergehenden Ansprüche, wobei das elektrische Antriebssystem (20) ein Stellgerät mit Schnittstelle zum Datenaustausch mit der Anlagensteuereinheit (30) aufweist, insbesondere einen Frequenzumrichter.

9. Anlage zur Herstellung eines Lebensmittelprodukts umfassend mindestens eine Transportvorrichtung (100) gemäss einem der vorhergehenden Ansprüche.

10. Verfahren zum Bestimmung von Längen (3) von Segmenten (2) einer Kette (1), die mittels eines elektrischen Antriebs (20) angetrieben wird, insbesondere in einer Transportvorrichtung (100) gemäss einem der vorhergehenden Ansprüche 1-8, wobei ein Messsensor (11) auf der Kette (1) angebrachten Messmarken (4), insbesondere Mitnehmer, erfasst,

**dadurch gekennzeichnet, dass**

vom Messsensor (11) erfasste Daten und von einem Absolutwertgeber (21) eines Servomotors (20), der die Kette (1) antreibt, gesendete Daten zeitrichtig zueinander zugeordnet werden, wobei ein Servolageistwert mittels Oversampling festgelegt wird,
wobei die folgende Beziehung verwendet wird:

$$P_x \;=\; (P_{t2} - P_{t1}) \;*\; (X_{pos} - 1) \;/OVS \;+\; P_{t1} \;[mm],$$

wobei $P_x$ der zu bestimmende Servolageistwert,
$P_{t1}$ die Servoposition zum Zeitpunkt t1 bei einem Bustakt,
$P_{t2}$ die Servoposition zum Zeitpunkt t2 bei einem nachfolgenden Bustakt,
$X_{pos}$ der Subtakt, bei dem ein Signalwechsel von 0 nach 1 stattfindet,
OVS der eingestellte Oversamplingfaktor,
daraus Längen (3) zwischen, insbesondere zwei aufeinanderfolgenden, Messmarken (4) bestimmt werden und daraus ein Signal erzeugt wird, das eine Information über die Qualität der Kette liefert.

11. Verfahren gemäss Anspruch 10, wobei

a. Rohdaten gespeichert werden und/oder
b.Messereignisse aus Messdaten bestimmt werden und/oder
c. Längen zwischen Messereignissen bestimmt werden und/oder
d. Veränderungen von Längen zwischen Messereignissen erkannt werden.

12. Verfahren gemäss einem der Ansprüche 10 oder 11, wobei eine Anlagensteuereinheit (30) durch eine taktsynchrone Busverbindung (16) vom Messsensor (11) erfasste Messdaten und von einem Positionssensor (21) des elektrischen Antriebs (20) gesendete Daten synchronisiert.

13. Computerprogrammprodukt für eine Anlagensteuereinheit, umfassend Befehle, die bei der Ausführung des Programms durch die Anlagensteuereinheit diese veranlassen, Daten vom Messsensor (11) zu empfangen und die weiteren Schritte des Verfahrens nach einem der Ansprüche 10-12 auszuführen.

**Claims**

1. Transport device (100), in particular for transporting product carriers in a plant for manufacturing food products, comprising

a) at least one chain (1) to which measuring marks (4) are attached,

b) an electric drive system (20) for driving the at least one chain (1), comprising a servo motor (25) and a position sensor (21), namely an absolute value encoder,

c) a plant control unit (30),

d) a measuring sensor (11) for detecting the measuring marks (4), with a switching frequency greater than 2000/s,

**characterized in that**

the plant control unit (30) comprises a first input (34) for receiving measurement data from the measuring sensor (12) and a second input (35) for receiving position data from the position sensor (21), and is designed to

- receiving data from the measuring sensor (11) and from the position sensor (21),
- assigning them to each other in a time-correct manner,
- determining lengths between, in particular two consecutive, measuring marks (4) and
- generating a signal therefrom which provides information about the quality of the chain,

wherein the transport device (100) comprises a processor unit (13) for data preprocessing, which serves as an input card for the plant control unit (30) and has an input (14) for data detected by the measuring sensor (11) and an output (15) for passing the data on to the plant control unit (30),

with an oversampling function for determining a subclock in the event of a signal change at the input, and wherein the plant control unit is designed to assign a servo position actual value, which corresponds to the position of the drive in the event of a signal change, precisely in time, wherein the plant control unit is designed to assign the servo position actual value precisely in time using the following relationship:

$$Px = (Pt2 - Pt1) * (Xpos-1) / OVS + Pt1 \ [mm]$$

, where

Px is the servo position value to be determined,

Pt1 is the servo position at time t1 during a bus cycle,

Pt2 is the servo position at time t2 during a subsequent bus cycle,

Xpos is the sub-clock at which a signal change from 0 to 1 takes place, OVS is the set oversampling factor.

2. Transport device according to claim 1, wherein the measuring sensor (11) is an inductive or optoelectronic sensor.

3. Transport device according to one of the preceding claims, wherein the at least one chain (1) comprises at least one reference measuring mark (5), in particular with a geometry differing from the other measuring marks (4).

4. Transport device according to one of the preceding claims, wherein the plant control unit (30) is designed to synchronize received data with the plant clock, in particular with a bus clock.

5. Transport device according to one of the preceding claims, wherein the system control unit (30) comprises a plant clock generator and

the transport device (100) has a clock-synchronous bus system (16) for synchronizing the system control unit (30) and the electrical drive system (20) and/or for synchronizing the system control unit (30) and the incoming measurement data.

6. Transport device according to one of the preceding claims, wherein the plant control unit (30) is designed to

a) store raw data and/or

b) determine measurement events from measurement data and/or

c) determine lengths between measurement events and/or

d) detect changes in lengths between measurement events.

7. Transport device according to one of the preceding claims, wherein the plant control unit (30) has at least one output (37) and is designed to forward data, in particular to a display unit and/or a cloud (18).

8. Transport device according to one of the preceding claims, wherein the electrical drive system (20) has an actuator with an interface for data exchange with the plant control unit (30), in particular a frequency converter.

9. System for producing a food product comprising at least one transport device (100) according to one of the preceding claims.

10. Method for determining lengths (3) of segments (2) of a chain (1) driven by an electric drive (20), in particular in a transport device (100) according to one of the preceding claims 1-8, wherein a measuring sensor (11) detects measuring marks (4) arranged on the chain (1), in particular followers,
**characterized in that**

data detected by the measuring sensor (11) and data sent by an absolute value encoder (21) of a servo motor (20) which drives the chain (1) are assigned to each other in a time-correct manner, wherein a servo position value is determined by means of oversampling,
using the following relationship:

$$Px = (Pt2- Pt1) * (Xpos-1) / OVS + Pt1 \ [mm]$$

, where
Px is the servo position value to be determined,
Pt1 is the servo position at time t1 during a bus cycle,
Pt2 is the servo position at time t2 during a subsequent bus cycle,
Xpos is the subclock at which a signal change from 0 to 1 takes place,
OVS is the set oversampling factor,
from which lengths (3) between, in particular two successive, measurement marks (4) are determined and from which a signal is generated which provides information about the quality of the chain.

11. Method according to claim 10, wherein

a) raw data are stored and/or
b) measurement events are determined from measurement data and/or
c) lengths between measurement events are determined and/or
d) changes in lengths between measurement events are detected.

12. Method according to one of claims 10 or 11, wherein a plant control unit (30) synchronizes measurement data detected by the measuring sensor (11) and data sent by a position sensor (21) of the electric drive (20) via a clock-synchronous bus connection (16).

13. Computer program product for a plant control unit, comprising commands which, when the program is executed by the plant control unit, cause the latter to receive data from the measuring sensor (11) and to carry out the further steps of the method according to one of claims 10-12.

**Revendications**

1. Dispositif de transport (100), en particulier pour le transport de supports de produits dans une installation de fabrication de produits alimentaires, comprenant

a. au moins une chaîne (1) sur laquelle sont disposées des marques de mesure (4),
b. un système d'entraînement électrique (20) adapté à entraîner ladite au moins une chaîne (1), comprenant un servomoteur (25) et un capteur de position (21), à savoir un codeur absolu,
c. une unité de commande de l'installation (30),
d. un capteur de mesure (11) adapté pour détecter les marques de mesure (4), avec une fréquence de commutation supérieure à 2000/s,

**caractérisé en ce que**

l'unité de commande de l'installation (30) comprend une première entrée (34) pour la réception de données de mesure provenant du capteur de mesure (12) et une deuxième entrée (35) pour la réception des données de position provenant du capteur de position (21),
et est conçu pour :

- recevoir des données issue du capteur de mesure (11) et du capteur de position (21),
- associer temporellement de manière cohérente les données issue du capteur de mesure (11) et les données du capteur de position les unes aux autres,
- déterminer des longueurs entre, en particulier, deux marques de mesure (4) successives, et
- générer à partir de ces données, un signal fournissant une information sur la qualité de la chaîne,

le dispositif de transport (100) comprenant une unité de traitement (13) pour le prétraitement des données, laquelle fait office de carte d'entrée pour l'unité de commande de l'installation (30) et qui comprend une entrée (14) pour les données détectée par le capteur de mesure (11) et une sortie (15) pour transmettre les données à l'unité de commande de l'installation (30),
ayant une fonction de suréchantillonnage pour déterminer une sous-horloge en cas de changement de signal à l'entrée,
et l'unité de commande de l'installation étant conçue pour attribuer avec précision dans le temps une valeur de position actuelle du servomoteur correspondant à la position de l'entraînement en cas de changement de signal,
l'unité de commande de l'installation étant conçue pour associer avec précision dans le temps la valeur réelle de position du servomoteur par la relation suivante :

$$P_x = (P_{t2} - P_{t1}) \ast (X_{pos} - 1) / OVS + P_{(t1)} \; [mm]$$

, où
$P_x$ est la valeur de position du servomoteur à déterminer,
$P_{(t1)}$ est la position du servomoteur à l'instant t1 pendant un cycle de bus,
$P_{(t2)}$ est la position du servomoteur à l'instant t2 pendant un cycle de bus suivant,
$X_{pos}$ est la sous-horloge auquel un changement de signal de 0 à 1 se produit,
OVS est le facteur de suréchantillonnage défini.

2. Dispositif de transport selon la revendication 1, dans lequel le capteur de mesure (11) est un capteur inductif ou optoélectronique.

3. Dispositif de transport selon l'une des revendications précédentes, dans lequel ladite au moins une chaîne (1) comprend au moins une marque de mesure de référence (5), notamment ayant une géométrie différente des autres marques de mesure (4).

4. Dispositif de transport selon l'une quelconque des revendications précédentes, dans lequel l'unité de commande de l'installation (30) est adaptée pour synchroniser les données reçues avec l'horloge de l'installation, en particulier avec une horloge de bus.

5. Dispositif de transport selon l'une des revendications précédentes, dans lequel l'unité de commande de l'installation (30) comprend un générateur d'horloge de l'installation et le dispositif de transport (100) comprend un système de bus (16) synchrone à l'horloge et adapté à synchroniser l'unité de commande de l'installation (30) et le système d'entraînement électrique (20) et/ou pour synchroniser l'unité de commande de l'installation (30) et les données de mesure entrantes.

6. Dispositif de transport selon l'une quelconque des revendications précédentes, dans lequel l'unité de commande de l'installation (30) est conçue pour,

   a. enregistrer des données brutes et/ou
   b. déterminer des événements de mesure à partir de données de mesure et/ou
   c. déterminer les longueurs entre des événements de mesure et/ou
   d. détecter les changements de longueur entre des événements de mesure.

7. Dispositif de transport selon l'une des revendications précédentes, dans lequel l'unité de commande de l'installation (30) comporte au moins une sortie (37) et est adaptée pour transmettre des données, notamment vers une unité d'affichage et/ou à un Cloud (18).

8. Dispositif de transport selon l'une quelconques des revendications précédentes, dans lequel le système d'entraînement électrique (20) comprend un actionneur avec une interface pour l'échange de données avec l'unité de commande de l'installation (30), en particulier un convertisseur de fréquence.

9. Installation de fabrication d'un produit alimentaire comprenant au moins un dispositif de transport (100) selon l'une des revendications précédentes.

10. Procédé de détermination de longueurs (3) de segments (2) d'une chaîne (1) entraînée par un entraînement électrique (20), notamment dans un dispositif de transport (100) selon l'une des revendications précédentes 1 à 8, dans lequel un capteur de mesure (11) détecte des marques de mesure (4), notamment des entraîneurs, disposées sur la chaîne (1), **caractérisé en ce que**

   des données détectées par le capteur de mesure (11) et des données émises par un capteur de position (21) d'un servomoteur (20) qui entraîne la chaîne (1) sont associées les unes aux autres en temps réel, une valeur réelle de la servomoteur étant déterminée au moyen d'un suréchantillonnage, selon la relation suivante :

   $$P_x = (P_{t2} - P_{t1}) * (X_{pos} - 1) / OVS + P_{(t1)} [mm],$$

   où
   $P_x$ est la valeur de position du servomoteur à déterminer,
   $P_{(t1)}$ est la position du servomoteur à l'instant t1 pendant un cycle de bus,
   $P_{(t2)}$ est la position du servomoteur à l'instant t2 pendant un cycle de bus suivant,
   $X_{pos}$ est la sous-horloge auquel un changement de signal de 0 à 1 se produit,
   OVS est le facteur de suréchantillonnage défini
   à partir desquels sont déterminées les longueurs (3) entre, en particulier, deux marques de mesure (4) successives, et
   à partir desquels est généré un signal fournissant une information sur la qualité de la chaîne.

11. Procédé selon la revendication 10, dans lequel

   a. les données brutes sont stockées et/ou
   b. des événements de mesure sont déterminés à partir de données de mesure et/ou
   c. les longueurs entre des événements de mesure sont déterminées et/ou
   d. des changements de longueur entre des événements de mesure peuvent être détectés.

12. Procédé selon l'une des revendications 10 ou 11, dans lequel une unité de commande de l'installation (30) synchronise les données de mesure détectée par le capteur de mesure (11) et des données émises par un capteur de position (21) de l'entraînement électrique (20) via une liaison bus synchronisée par horloge (16).

13. Produit programme d'ordinateur pour une unité de commande de l'installation, comprenant des instructions qui, lors de l'exécution du programme par l'unité de commande de l'installation, amènent celle-ci à recevoir des données du capteur de mesure (11) et à exécuter les étapes du procédé selon l'une des revendications 10 à 12.

Fig. 1

Fig. 2

EP 4 146 955 B1

**Fig. 3a**

**Fig. 3b**

**Fig. 3c**

**Fig. 3d**

**Fig. 4**

EP 4 146 955 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2710321 B1
- DE 102017119301 A1
- US 5490590 A
- US 20110093218 A1
- EP 3167267 A2
- EP 3196625 A1
- GB 2406844 A
- WO 2017220281 A1